# FASCICULE DE BREVET EUROPEEN

(11) **EP 4 530 202 B1**
(45) Date de publication et mention de la délivrance du brevet: **30.09.2026**
(21) Numéro de dépôt: 24196505.2
(22) Date de dépôt: 26.08.2024
(51) Int. Cl.: B64F 1/28, F17C 6/00, B64D 37/30

(54) **INSTALLATION AÉROPORTUAIRE COMPORTANT UNE PLURALITÉ DE RÉSERVOIRS DE STOCKAGE DE DIHYDROGÈNE**
FLUGHAFENANLAGE MIT EINER VIELZAHL VON SPEICHERTANKS FÜR WASSERSTOFF
AIRPORT FACILITY COMPRISING A PLURALITY OF HYDROGEN STORAGE TANKS

(30) Priorité: 26.09.2023 FR 2310199
(43) Date de publication de la demande: 02.04.2025
(73) Titulaire: AIRBUS OPERATIONS (S.A.S.), 31060 Toulouse (FR); Airbus (S.A.S.), 31700 Blagnac (FR)
(72) Inventeur: LANDOLT, Jonathan, BLAGNAC (FR); DUTHEIL, Jean-Philippe, TOULOUSE (FR)
(74) Mandataire: Airbus-OPS SAS

(56) Documents cités:
- WO-A1-2021/144087
- WO-A1-2023/041401
- CN-U- 216 010 426
- US-A1- 2023 159 185

## Description

La présente invention concerne une installation aéroportuaire comportant une pluralité de réservoirs de stockage à différentes pressions de saturation afin de pouvoir alimenter différents types d'aéronefs, ainsi qu'un procédé de gestion d'une telle installation aéroportuaire.

Dans le cadre de la réduction de la consommation de kérosène dans les moteurs d'aéronef, il est connu d'utiliser le dihydrogène comme carburant. Pour ce faire, l'aéronef comporte un réservoir de dihydrogène et l'aéroport comporte un réservoir de stockage de dihydrogène et un camion-citerne fait le trajet entre les deux pour remplir le réservoir de stockage et le réservoir pour remplir ce dernier.

Le dihydrogène est généralement stocké à basse température dans le réservoir de stockage de l'aéroport et le réservoir de l'aéronef. La température de stockage du dihydrogène dépend entre autres de la pression de saturation à l'intérieur du réservoir et plus la température augmente, plus la pression de saturation augmente.

Chaque réservoir d'aéronef est prévu pour fonctionner avec une pression de saturation particulière qui assure un équilibre particulier entre le dihydrogène liquide et le dihydrogène gazeux.

On connait, notamment selon la demande de brevet WO2023/041401, une installation aéroportuaire disposant de moyens d'approvisionnement des aéronefs en dihydrogène comportant pour chaque type d'aéronefs, un réservoir de stockage à une pression de saturation comprise dans un intervalle différents des autres intervalles, et pour chaque réservoir de stockage, des moyens de remplissage destinés à remplir depuis ledit réservoir de stockage, le réservoir de l'aéronef correspondant audit réservoir de stockage.

Si la pression de saturation du réservoir de stockage est inférieure à la pression de saturation du réservoir de l'aéronef, il est nécessaire de réchauffer le dihydrogène pour augmenter sa pression de saturation, ce qui entraîne une consommation supplémentaire d'énergie.

Si la pression de saturation du réservoir de stockage est supérieure à la pression de saturation du réservoir de l'aéronef, il est nécessaire de ventiler le réservoir de l'aéronef en laissant s'échapper du dihydrogène, ce qui entraîne une perte de dihydrogène.

Pour limiter les pertes, il est donc nécessaire de trouver une installation aéroportuaire qui permet de répondre aux exigences liées au stockage de dihydrogène dans les réservoirs d'aéronefs.

Un objet de la présente invention est de proposer une installation aéroportuaire qui comporte une pluralité de réservoirs de stockage de dihydrogène à différentes pressions de saturation afin de pouvoir alimenter différents types d'aéronefs.

À cet effet, l'invention présente une installation aéroportuaire conforme à la revendication 1. Il ressort de cette revendication que les réservoirs des aéronefs et les réservoirs de stockage sont adaptés dans leurs intervalles de pression de saturation. Une telle adaptation d'intervalle permet des adaptations réduites de pression des réservoirs d'aéronef et des réservoirs de stockage et permet donc des pertes de dihydrogène réduites.

Avec une telle installation, il est possible de remplir les réservoirs de différents types d'aéronefs en limitant les pertes.

L'invention concerne également un procédé de gestion d'une installation aéroportuaire conforme à la revendication 10.

Avec un tel procédé, il est possible de remplir les réservoirs de différents types d'aéronefs en limitant les pertes de dihydrogène.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La figure 1 est une représentation schématique d'une installation aéroportuaire selon un premier mode de réalisation de l'invention, et
la figure 2 est une représentation schématique d'une installation aéroportuaire selon un deuxième mode de réalisation de l'invention.

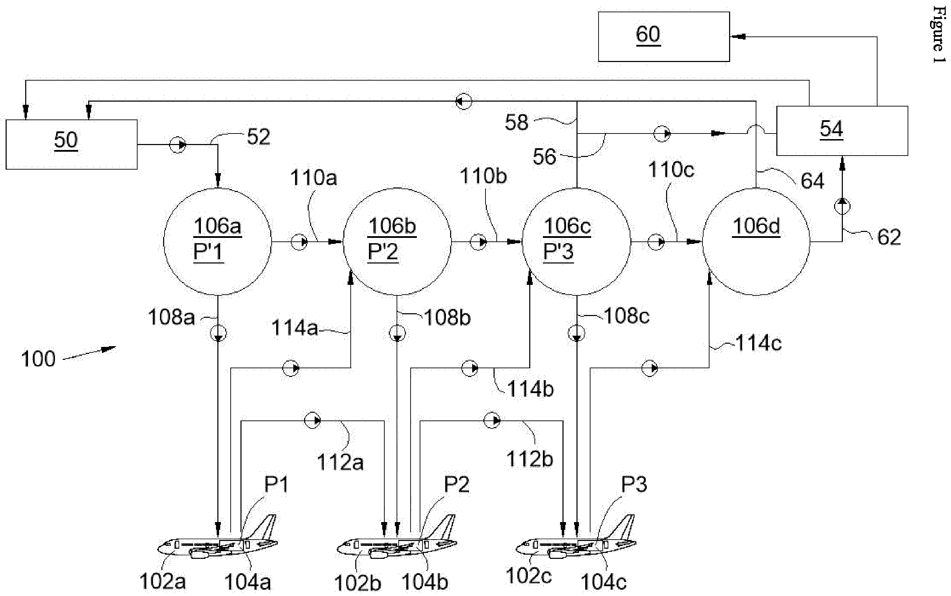

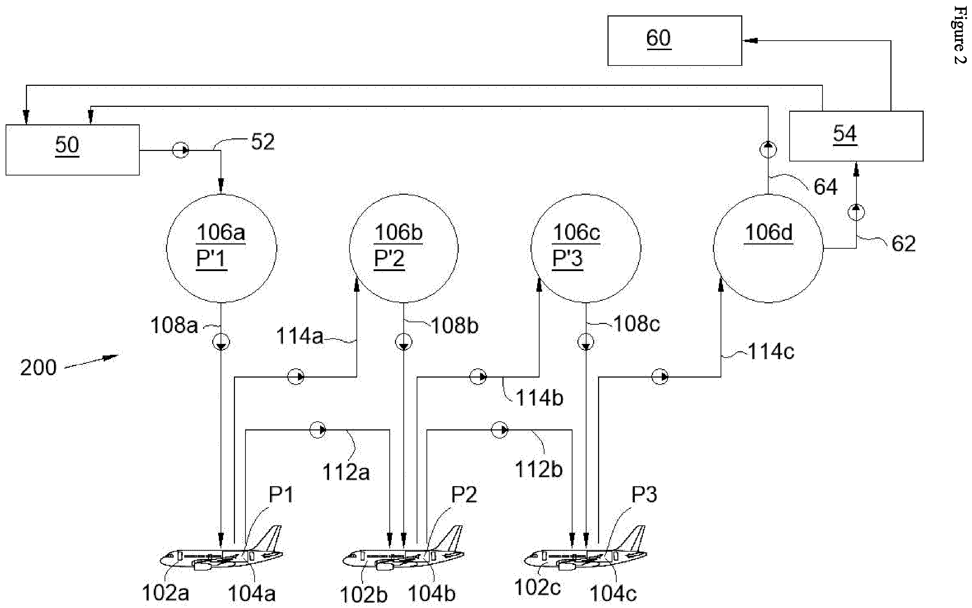

La figure 1 montre une installation aéroportuaire 100 selon un premier mode de réalisation de l'invention et la figure 2 montre une installation aéroportuaire 200 selon un deuxième mode de réalisation de l'invention.

L'installation aéroportuaire 100, 200 permet d'alimenter en dihydrogène différents types d'aéronefs 102a-c qui sont ici de trois types. Chaque aéronef 102a-c comporte un réservoir 104a-c qui contient du dihydrogène à une pression de saturation particulière selon le type de l'aéronef 102a-c.

Ainsi, chaque réservoir 104a-c d'un aéronef 102a-c d'un type particulier contient du dihydrogène à une pression de saturation comprise dans un premier intervalle P1, P2, P3 parmi une pluralité de premiers intervalles P1, P2, P3.

Selon un mode de réalisation particulier de l'invention, la pression de saturation pour un aéronef du premier type 102a est comprise dans le premier intervalle P1 égal à [1,2 bars, 2 bars ([120 kPa, 200 kPa]), la pression de saturation pour un aéronef du deuxième type 102b est comprise dans le premier intervalle P2 égal à [2 bars, 4 bars] ([200 kPa, 400 kPa]) et la pression de saturation pour un aéronef du troisième type 102c est comprise dans le premier intervalle P2 égal à [4 bars, 6 bars] ([400 kPa, 600 kPa]).

Chaque premier intervalle P1, P2, P3 est différent des autres premiers intervalles P1, P2, P3, c'est-à-dire que les premiers intervalles P1, P2, P3 ne se chevauchent pas, bien qu'ils puissent avoir des bornes communes.

Pour chaque type d'aéronef 102a-c et donc pour chaque premier intervalle P1, P2, P3, l'installation aéroportuaire 100, 200 comporte un réservoir de stockage 106a-c qui est à une pression de saturation comprise dans un deuxième intervalle P'1, P'2, P'3 où, pour chaque type, le deuxième intervalle P'1, P'2, P'3 est différent des autres deuxièmes intervalles P'1, P'2, P'3 c'est-à-dire que les deuxièmes intervalles P'1, P'2, P'3 ne se chevauchent pas, bien qu'ils puissent avoir des bornes communes.

Dans le mode de réalisation de l'invention présenté ici, pour le premier type d'aéronef 102a, un premier réservoir de stockage 106a est à une pression de saturation qui est dans le deuxième intervalle P'1 égal à [1,05 bars, 1,2 bars] ([105 kPa, 120 kPa]), pour le deuxième type d'aéronef 102b, un deuxième réservoir de stockage 106b est à une pression de saturation qui est dans le deuxième intervalle P'2 égal à [2 bars, 3 bars] ([200 kPa, 300 kPa]) et pour le troisième type d'aéronef 102c, un troisième réservoir de stockage 106c est à une pression de saturation qui est dans le deuxième intervalle P'3 égal à [4 bars, 5 bars] ([400 kPa, 500 kPa]).

Ainsi, dans le mode de réalisation de l'invention présenté ici, deux des deuxièmes intervalles, à savoir P'2 et P'3 sont inclus dans le premier intervalle P2 et P3 associé au type d'aéronef 102b-c.

Même si l'intervalle P'1 [1,05 bars, 1,2 bars] ([105 kPa, 120 kPa]) n'est pas inclus dans l'intervalle P1 [1,2 bars, 2 bars] ([120 kPa, 200 kPa]), lors de son transfert du réservoir de stockage 106a vers le réservoir 104a de l'aéronef 102a, le dihydrogène se réchauffe, ce qui entraîne une augmentation de la pression de saturation et le dihydrogène arrive dans le réservoir 104a de l'aéronef 102a avec une pression de saturation d'au moins 1,2 bars. Ainsi, la pression de saturation du dihydrogène est incluse dans le premier intervalle P1.

Ainsi, d'une manière générale, le dihydrogène est stocké dans un réservoir de stockage 106a-c à une pression de saturation comprise dans un deuxième intervalle P'1, P'2, P'3 qui est tel que la pression de saturation du dihydrogène qui arrive dans le réservoir 104a-c de l'aéronef 102a-c est incluse dans le premier intervalle P1, P2, P3 correspondant à l'aéronef 102a-c.

Pour alimenter chaque type d'aéronef 102a-c à partir du réservoir de stockage 106a-c dont la pression de saturation est compatible avec la pression de saturation du réservoir 104a-c du type considéré, l'installation aéroportuaire 100, 200 comporte également, pour chaque réservoir de stockage 106a-c, des moyens de remplissage 108a-c qui assurent le remplissage, depuis le réservoir de stockage 106a-c considéré, du réservoir 104a-c de l'aéronef 102a-c du type compatible.

Il y a ainsi des moyens de remplissage 108a pour remplir le réservoir 104a de l'aéronef 102a du premier type correspondant au premier intervalle P1 à partir du premier réservoir 106a correspondant au deuxième intervalle P'1, des moyens de remplissage 108b pour remplir le réservoir 104b de l'aéronef 102b du deuxième type correspondant au premier intervalle P2 à partir du deuxième réservoir 106b correspondant au deuxième intervalle P'2, et des moyens de remplissage 108c pour remplir le réservoir 104c de l'aéronef 102c du troisième type correspondant au premier intervalle P3 à partir du troisième réservoir 106c correspondant au deuxième intervalle P'3.

Les moyens de remplissage 108a-c sont par exemple des camions-citernes qui assurent le transport du dihydrogène d'un réservoir de stockage 106a-c à un réservoir 104a-c d'aéronef 102a-c. La citerne du camion-citerne peut être adaptée à fonctionner avec tous les deuxièmes intervalles P'1, P'2, P'3 prévus ou uniquement pour l'un d'entre eux et il y a alors un camion-citerne pour chaque deuxième intervalle P'1, P'2, P'3.

Les moyens de remplissage 108a-c peuvent également être des canalisations équipées de pompes.

Dans les modes de réalisation de l'invention présentés ici, le dihydrogène est délivré dans le premier réservoir de stockage 106a à partir d'un système de liquéfaction 50 qui assure la liquéfaction du dihydrogène à la pression de saturation correspondant au deuxième intervalle P'1 avec les pressions les plus faibles, c'est-à-dire ici le deuxième intervalle [1,05 bars, 1,2 bars] ([105 kPa, 120 kPa]).

Le transport du dihydrogène du système de liquéfaction 50 vers le premier réservoir de stockage 106a s'effectue par tous premiers moyens de transport 52 appropriés, comme un camion-citerne ou une canalisation avec une pompe.

Dans une première variante du premier mode de réalisation, au fur et à mesure que la température du dihydrogène présent dans le réservoir de stockage 106c à la pression de saturation correspondant aux pressions les plus fortes augmente, alors la pression de saturation dudit réservoir de stockage 106c augmente aussi et pour éviter qu'elle ne sorte du deuxième intervalle (ici P'3), le dihydrogène est en partie évacué vers une pile à combustible 54 ou vers le système de liquéfaction 50 par des deuxièmes 56, respectivement troisièmes 58 moyens de transport appropriés comme un camion-citerne ou une canalisation avec une pompe.

La pile à combustible 54 peut alimenter électriquement le système de liquéfaction 50 ou tout autre système électrique 60.

Dans une deuxième variante du premier mode de réalisation de l'invention et dans le deuxième mode de réalisation, l'installation aéroportuaire 100, 200 comporte un quatrième réservoir de stockage 106d qui est à une pression de saturation supérieure à 5 bars.

Dans ces cas, pour limiter l'échauffement du dihydrogène dans le quatrième réservoir de stockage 106d, le dihydrogène est en partie évacué vers la pile à combustible 54 ou vers le système de liquéfaction 50 par des quatrièmes 62, respectivement cinquièmes 64 moyens de transport appropriés comme un camion-citerne ou une canalisation avec une pompe.

Selon un mode de réalisation particulier, l'installation aéroportuaire 100, 200 comporte un premier système de transfert 112a qui assure le transfert de dihydrogène du réservoir 104a d'un aéronef 102a du premier type d'aéronef 102a vers le réservoir 104b d'un aéronef 102b du deuxième type d'aéronef 102b, et un deuxième système de transfert 112b qui assure le transfert de dihydrogène du réservoir 104b de l'aéronef 102b du deuxième type d'aéronef 102b vers le réservoir 104c de l'aéronef 102c du troisième type d'aéronef 102c.

Avec un tel arrangement, lorsque la température du dihydrogène présent dans le réservoir 104a-b d'un aéronef 102a-b augmente, il est transféré vers le réservoir 104b-c de l'aéronef 102b-c dont le premier intervalle présente des pressions supérieures à celle du premier intervalle de l'aéronef 102a-b d'origine.

Chaque système de transfert 112a-b est par exemple un camion-citerne ou une canalisation avec une pompe.

Selon un mode de réalisation particulier de l'invention, l'installation aéroportuaire 100, 200 comporte un premier système de remplissage 114a qui assure le transfert de dihydrogène du réservoir 104a de l'aéronef 102a du premier type d'aéronef 102a vers le deuxième réservoir de stockage 106b, et un deuxième système de remplissage 114b qui assure le transfert de dihydrogène du réservoir 104b de l'aéronef 102b du deuxième type d'aéronef 102b vers le troisième réservoir de stockage 106c.

Lorsqu'il y a le quatrième réservoir de stockage 106d, l'installation aéroportuaire 100, 200 comporte un troisième système de remplissage 114c destiné à assurer le transfert de dihydrogène du réservoir 104c de l'aéronef 102c du troisième type d'aéronef 102c vers le quatrième réservoir de stockage 106d.

Ainsi, lorsque la température du dihydrogène présent dans le réservoir 104a-c d'un aéronef 102a-c augmente, il est transféré vers le réservoir de stockage 106b-d dont le deuxième intervalle ou dont la pression de saturation présente des pressions supérieures à celles du premier intervalle de l'aéronef 102a-c d'origine.

Chaque système de remplissage 114a-c est par exemple un camion-citerne ou une canalisation avec une pompe.

Dans le premier mode de réalisation de l'invention, l'installation aéroportuaire 100 comporte un premier système de déversement 110a qui assure le transfert de dihydrogène du premier réservoir de stockage 106a vers le deuxième réservoir de stockage 106b, et un deuxième système de déversement 110b qui assure le transfert de dihydrogène du deuxième réservoir de stockage 106b vers le troisième réservoir de stockage 106c, et lorsqu'il y a le quatrième réservoir de stockage 106d, un troisième système de déversement 110c qui assure le transfert de dihydrogène du troisième réservoir de stockage 106c vers le quatrième réservoir de stockage 106d.

Ainsi, lorsque la température du dihydrogène présent dans un réservoir de stockage 106a augmente, il est transféré vers le réservoir de stockage 106b-d dont le deuxième intervalle ou dont la pression de saturation présente des pressions supérieures à celles du deuxième intervalle du réservoir de stockage d'origine.

Chaque système de déversement 110a-c est par exemple un camion-citerne ou une canalisation avec une pompe.

Dans le deuxième mode de réalisation de l'invention, les réservoirs de stockage 106a-d sont fluidiquement indépendants les uns des autres, c'est-à-dire qu'il n'y a aucun transfert de dihydrogène entre eux.

Dans le deuxième mode de réalisation de l'invention, pour pallier l'absence des systèmes de déversement, chaque réservoir de stockage 106a-d change régulièrement de pression de saturation du fait qu'il se vide ou que le dihydrogène se réchauffe. Il y a alors un changement cyclique des deuxièmes intervalles et de la pression de saturation supérieure à 5 bars.

Ainsi, dans l'exemple de la figure 2, la pression de saturation du premier réservoir de stockage 106a est entre [1,05 bars, 1,2 bars] ([105 kPa, 120 kPa]), la pression de saturation du deuxième réservoir de stockage 106b est entre [2 bars, 3 bars] ([200 kPa, 300 kPa]), = la pression de saturation du troisième réservoir de stockage 106c est entre [4 bars, 5 bars] ([400 kPa, 500 kPa]) et la pression de saturation du quatrième réservoir de stockage 106d est supérieure à 5 bars. Chaque réservoir de stockage 106a-d alimente le type d'aéronef 102a-c correspondant à sa pression de saturation, ce qui correspond par exemple pour le premier réservoir de stockage 106a à un remplissage complet, pour le deuxième réservoir de stockage 106b à un remplissage au 2/3, pour le troisième réservoir de stockage 106c à un remplissage au 1/3 et pour le quatrième réservoir de stockage 106d à un remplissage presque vide. Ces valeurs de remplissage sont données uniquement à titre indicatif. Elles peuvent notamment varier en cas de non-utilisation prolongée de l'installation aéroportuaire. En effet, dans un tel cas, la pression de saturation dans un réservoir de stockage 106a-d augmente au cours du temps, même en l'absence de prélèvement de dihydrogène dans le réservoir de stockage 106a-d.

Le premier réservoir de stockage 106a est alimenté en dihydrogène par le système de liquéfaction 50 et le quatrième réservoir de stockage 106d alimente par ventilation le système de liquéfaction 50 ou la pile à combustible 54.

Lorsque le quatrième réservoir de stockage 106d est pratiquement vide, il est rempli à partir du système de liquéfaction 50. Il est alors à un remplissage complet avec une pression de saturation entre [1,05 bars, 1,2 bars] ([105 kPa, 120 kPa]).

Dans le même temps, les autres réservoirs de stockage 106a-c se vident ou se réchauffent.

Le premier réservoir de stockage 106a est alors aux 2/3 plein avec une pression de saturation entre [2 bars, 3 bars] ([200 kPa, 300 kPa]), et il peut être alimenté par les réservoirs 104a de l'aéronef 102a du premier type par un système de remplissage adapté.

Le deuxième réservoir de stockage 106b est alors au 1/3 plein avec une pression de saturation entre [4 bars, 5 bars] ([400 kPa, 500 kPa]), et il peut être alimenté par les réservoirs 104b de l'aéronef 102b du deuxième type par un système de remplissage adapté.

Le troisième réservoir de stockage 106c est alors pratiquement vide avec une pression de saturation supérieure à 5 bars, et il peut être alimenté par les réservoirs 104c de l'aéronef 102c du troisième type par un système de remplissage adapté. En cas de besoin, le dihydrogène ventilé à partir du troisième réservoir de stockage 106c alimente le système de liquéfaction 50 ou la pile à combustible 54.

Lorsque le troisième réservoir de stockage 106c est pratiquement vide, il est rempli à partir du système de liquéfaction 50. Il est alors à un remplissage complet avec une pression de saturation entre [1,05 bars, 1,2 bars] ([105 kPa, 120 kPa]).

Dans le même temps, les autres réservoirs de stockage se vident ou se réchauffent.

Le premier réservoir de stockage 106a est alors au 1/3 plein avec une pression de saturation entre [4 bars, 5 bars] ([400 kPa, 500 kPa]), - et il peut être alimenté par les réservoirs 104b de l'aéronef 102b du deuxième type par un système de remplissage adapté.

Le deuxième réservoir de stockage 106b est alors pratiquement vide avec une pression de saturation supérieure à 5 bars et il peut être alimenté par les réservoirs 104c de l'aéronef 102c du troisième type par un système de remplissage adapté. En cas de besoin, le dihydrogène ventilé à partir du deuxième réservoir de stockage 106b alimente le système de liquéfaction 50 ou la pile à combustible 54.

Le quatrième réservoir de stockage 106d est aux 2/3 plein avec une pression de saturation entre [2 bars, 3 bars] ([200 kPa, 300 kPa]), et il peut être alimenté par les réservoirs 104a de l'aéronef 102a du premier type par un système de remplissage adapté.

Lorsque le deuxième réservoir de stockage 106b est pratiquement vide, il est rempli à partir du système de liquéfaction 50. Il est alors à un remplissage complet avec une pression de saturation entre [1,05 bars, 1,2 bars] ([105 kPa, 120 kPa]).

Dans le même temps, les autres réservoirs de stockage se vident ou se réchauffent.

Le premier réservoir de stockage 106a est alors pratiquement vide avec une pression de saturation supérieure à 5 bars, et il peut être alimenté par les réservoirs 104c de l'aéronef 102c du troisième type par un système de remplissage adapté. En cas de besoin, le dihydrogène ventilé à partir du premier réservoir de stockage 106a alimente le système de liquéfaction 50 ou la pile à combustible 54.

Le troisième réservoir de stockage 106c est alors aux 2/3 plein avec une pression de saturation supérieure entre [2 bars, 3 bars] ([200 kPa, 300 kPa]) et il peut être alimenté par les réservoirs 104a de l'aéronef 102a du premier type par un système de remplissage adapté.

Le quatrième réservoir de stockage 106d est au 1/3 plein avec une pression de saturation entre [4 bars, 5 bars] ([400 kPa, 500 kPa]), et il peut être alimenté par les réservoirs 104b de l'aéronef 102b du deuxième type par un système de remplissage adapté.

Le premier réservoir 106a est alors à nouveau rempli et le cycle recommence.

Chaque réservoir de stockage 106a-d effectue donc une permutation et prend successivement la position de premier réservoir de stockage avec une pression de saturation entre [1,05 bars, 1,2 bars] ([105 kPa, 120 kPa]), de deuxième réservoir de stockage avec une pression de saturation entre [2 bars, 3 bars] ([200 kPa, 300 kPa]), de troisième réservoir de stockage avec une pression de saturation entre [4 bars, 5 bars] ([400 kPa, 500 kPa]) et etde quatrième réservoir de stockage avec une pression de saturation supérieure à 5 bars (500 kPa) et ainsi de suite. Les moyens de remplissage sont adaptés au fur et à mesure pour permettre l'alimentation du type d'aéronef correspondant à la pression de saturation. De la même manière, les systèmes de transfert sont modifiés en conséquence.

Ainsi, à partir d'une situation où le premier réservoir de stockage 106a est à un premier degré de remplissage (plein) tel qu'il est à une pression de saturation dans le deuxième intervalle P'1 de [1,05 bars, 1,2 bars] ([105 kPa, 120 kPa]), où le deuxième réservoir de stockage 106b est à un deuxième degré de remplissage (2/3 plein) tel qu'il est à une pression de saturation dans le deuxième intervalle P'2 de [2 bars, 3 bars] ([200 kPa, 300 kPa]), où le troisième réservoir de stockage 106c est à un troisième degré de remplissage (1/3 plein) tel qu'il est à une pression de saturation dans le deuxième intervalle P'3 de [4 bars, 5 bars] ([400 kPa, 500 kPa]), et où le quatrième réservoir de stockage 106d est à un quatrième degré de remplissage (pratiquement vide) tel qu'il est à une pression de saturation supérieure à 5 bars, un procédé de gestion de l'installation aéroportuaire 200 consiste en ce que chaque réservoir de stockage 106a-d passe successivement et en parallèle du premier degré de remplissage avec une pression de saturation dans le deuxième intervalle P'1 de [1,05 bars, 1,2 bars] ([105 kPa, 120 kPa]) au deuxième degré de remplissage avec une pression de saturation dans le deuxième intervalle P'2 de [2 bars, 3 bars] ([200 kPa, 300 kPa]) au troisième degré de remplissage avec une pression de saturation dans le deuxième intervalle P'3 de [4 bars, 5 bars] ([400 kPa, 500 kPa]) au quatrième degré de remplissage avec une pression de saturation supérieure à 5 bars et au premier degré de remplissage avec une pression de saturation dans le deuxième intervalle P'1 de [1,05 bars, 2 bars] ([105 kPa, 200 kPa]) et ainsi de suite.

## Revendications

1. Installation aéroportuaire (100, 200) comportant :
- une pluralité de types d'aéronefs (102a-c) où chaque aéronef (102a-c) d'un type comporte un réservoir (104a-c) destiné à contenir du dihydrogène à une pression de saturation comprise dans un premier intervalle (P1, P2, P3) parmi une pluralité de premiers intervalles (P1, P2, P3), où chaque premier intervalle (P1, P2, P3) est différent des autres premiers intervalles (P1, P2, P3),
- une pluralité de réservoirs de stockage (106a-c) de dihydrogène, chaque réservoir de stockage étant à une pression de saturation comprise dans un deuxième intervalle (P'1, P'2, P'3) différent des autres deuxièmes intervalles (P'1, P'2, P'3) des autres réservoirs de stockage,
- pour chaque type d'aéronef (102a-c), un réservoir de stockage correspondant auxdits réservoirs de stockage (106a-c) pour alimenter chaque type d'aéronef à partir du réservoir de stockage dont la pression de saturation est compatible avec la pression de saturation du réservoir du type considéré, et
- pour chaque réservoir de stockage (106a-c), des moyens de remplissage (108a-c) destinés à remplir depuis ledit réservoir de stockage (106a-c), le réservoir (104a-c) de l'aéronef (102a-c) correspondant audit réservoir de stockage (106a-c).

2. Installation aéroportuaire (100, 200) selon la revendication 1, **caractérisée en ce qu'**il y a trois types d'aéronefs (102a-c), **en ce que** pour un premier type d'aéronef (102a), le premier intervalle (P1) est [1,2 bars, 2 bars] ([120 kPa, 200 kPa]) et le deuxième intervalle (P'1) d'un premier réservoir de stockage (106a) est [1,05 bars, 1,2 bars] ([105 kPa, 120 kPa]), **en ce que** pour un deuxième type d'aéronef (102b), le premier intervalle (P2) est [2 bars, 4 bars] ([200 kPa, 400 kPa]) et le deuxième intervalle (P'2) d'un deuxième réservoir de stockage (106b) est [2 bars, 3 bars] ([200 kPa, 300 kPa]) et **en ce que** pour un troisième type d'aéronef (102c), le premier intervalle (P3) est [4 bars, 6 bars] ([400 kPa, 600 kPa]) et le deuxième intervalle (P'3) d'un troisième réservoir de stockage (106c) est [4 bars, 5 bars] ([400 kPa, 500 kPa]).

3. Installation aéroportuaire (100, 200) selon la revendication 2, **caractérisée en ce qu'**elle comporte un premier système de transfert (112a) destiné à assurer le transfert de dihydrogène du réservoir (104a) du premier type d'aéronef (102a) vers le réservoir (104b) du deuxième type d'aéronef (102b), et un deuxième système de transfert (112b) destiné à assurer le transfert de dihydrogène du réservoir (104b) du deuxième type d'aéronef (102b) vers le réservoir (104c) du troisième type d'aéronef (102c).

4. Installation aéroportuaire (100, 200) selon l'une des revendications 2 ou 3, **caractérisée en ce qu'**elle comporte un premier système de remplissage (114a) destiné à assurer le transfert de dihydrogène du réservoir (104a) du premier type d'aéronef (102a) vers le deuxième réservoir de stockage (106b), et un deuxième système de remplissage (114b) destiné à assurer le transfert de dihydrogène du réservoir (104b) du deuxième type d'aéronef (102b) vers le troisième réservoir de stockage (106c).

5. Installation aéroportuaire (100) selon l'une des revendications 2 à 4, **caractérisée en ce qu'**elle comporte un premier système de déversement (110a) destiné à assurer le transfert de dihydrogène du premier réservoir de stockage (106a) vers le deuxième réservoir de stockage (106b), et un deuxième système de déversement (110b) destiné à assurer le transfert de dihydrogène du deuxième réservoir de stockage (106b) vers le troisième réservoir de stockage (106c).

6. Installation aéroportuaire (100) selon la revendication 5, **caractérisée en ce qu'**elle comporte un quatrième réservoir de stockage (106d) à une pression de saturation supérieure à 5 bars, et un troisième système de déversement (110c) destiné à assurer le transfert de dihydrogène du troisième réservoir de stockage (106c) vers le quatrième réservoir de stockage (106d).

7. Installation aéroportuaire (100) selon la revendication 6, **caractérisée en ce qu'**elle comporte un troisième système de remplissage (114c) destiné à assurer le transfert de dihydrogène du réservoir (104c) du troisième type d'aéronef (102c) vers le quatrième réservoir de stockage (106d).

8. Installation aéroportuaire (200) selon l'une des revendications 2 à 4, **caractérisée en ce que** les réservoirs de stockage (106a-c) sont fluidiquement indépendants les uns des autres.

9. Installation aéroportuaire (200) selon la revendication 8, **caractérisée en ce qu'**elle comporte un quatrième réservoir de stockage (106d) fluidiquement indépendant des autres réservoirs de stockage (106a-c).

10. Procédé de gestion d'une installation aéroportuaire (200) selon la revendication 9, dans lequel à partir d'une situation où le premier réservoir de stockage (106a) est à un premier degré de remplissage tel qu'il est à une pression de saturation dans le deuxième intervalle (P'1) de [1,05 bars, 1,2 bars] ([105 kPa, 120 kPa]), où le deuxième réservoir de stockage (106b) est à un deuxième degré de remplissage tel qu'il est à une pression de saturation dans le deuxième intervalle (P'2) de [2 bars, 3 bars] ([200 kPa, 300 kPa]), où le troisième réservoir de stockage (106c) est à un troisième degré de remplissage tel qu'il est à une pression de saturation dans le deuxième intervalle (P'3) de [4 bars, 5 bars ([400 kPa, 500 kPa]), où le quatrième réservoir de stockage (106d) est à un quatrième degré de remplissage tel qu'il est à une pression de saturation supérieure à 5 bar (500 kPa), chaque réservoir de stockage (106a-d) passe successivement et en parallèle du premier degré de remplissage avec une pression de saturation dans le deuxième intervalle (P'1) de [1,05 bars, 1,2 bars] ([105 kPa, 120 kPa]) au deuxième degré de remplissage avec une pression de saturation dans le deuxième intervalle (P'2) de [2 bars, 3 bars] ([200 kPa, 300 kPa]) au troisième degré de remplissage avec une pression de saturation dans le deuxième intervalle (P'3) de [4 bars, 5 bars] ([400 kPa, 500 kPa]) au quatrième degré de remplissage avec une pression de saturation supérieure à 5 bars (500 kPa) et au premier degré de remplissage avec une pression de saturation dans le deuxième intervalle (P'1) de [1,05 bars, 2 bars] ([105 kPa, 120 kPa]) et ainsi de suite.

## Patentansprüche

1. Flughafenanlage (100, 200), die Folgendes aufweist:
- mehrere Luftfahrzeugtypen (102a-c), wobei jedes Luftfahrzeug (102a-c) eines Typs einen Tank (104a-c) aufweist, der zur Aufnahme von Wasserstoff mit einem Sättigungsdruck in einem ersten Intervall (P1, P2, P3) von mehreren ersten Intervallen (P1, P2, P3) vorgesehen ist, wobei jedes erste Intervall (P1, P2, P3) von den anderen ersten Intervallen (P1, P2, P3) verschieden ist,
- mehrere Wasserstoff-Speichertanks (106a-c), wobei jeder Speichertank unter einem Sättigungsdruck zwischen einem zweiten Intervall (P'1, P'2, P'3) steht, das von den anderen zweiten Intervallen (P'1, P'2, P'3) der anderen Speichertanks verschieden ist,
- für jeden Luftfahrzeugtyp (102a-c) einen Speichertank, der den Speichertanks (106a-c) zur Versorgung eines jeden Luftfahrzeugtyps von demjenigen Speichertank entspricht, dessen Sättigungsdruck mit dem Sättigungsdruck des betrachteten Speichertyps verträglich ist, und
- für jeden Speichertank (106a-c) Füllmittel (108a-c), die zum Füllen des dem Speichertank (106a-c) entsprechenden Tanks (104a-c) des Luftfahrzeugs (102a-c) aus dem Speichertank (106a-c) vorgesehen sind.

2. Flughafenanlage (100, 200) nach Anspruch 1, **dadurch gekennzeichnet, dass** sie drei Luftfahrzeugtypen (102a-c) aufweist, wobei für einen ersten Luftfahrzeugtyp (102a) das erste Intervall (P1) [1,2 bar, 2 bar] ([120 kPa, 200 kPa]) beträgt und das zweite Intervall (P'1) eines ersten Speichertanks (106a) [1,05 bar, 1,2 bar] ([105 kPa, 120 kPa]) beträgt, und dadurch, dass für einen zweiten Luftfahrzeugtyp (102b) das erste Intervall (P2) [2 bar, 4 bar] ([200 kPa, 400 kPa]) beträgt und das zweite Intervall (P'2) eines zweiten Speichertanks (106b) [2 bar, 3 bar] ([200 kPa, 300 kPa]) beträgt, und dadurch, dass für einen dritten Luftfahrzeugtyp (102c) das erste Intervall (P3) [4 bar, 6 bar] ([400 kPa, 600 kPa]) beträgt und das zweite Intervall (P'3) eines dritten Speichertanks (106c) [4 bar, 5 bar] ([400 kPa, 500 kPa]) beträgt.

3. Flughafenanlage (100, 200) nach Anspruch 2, **dadurch gekennzeichnet, dass** sie ein erstes Übertragungssystem (112a), das zur Gewährleistung der Übertragung von Wasserstoff vom Tank (104a) des ersten Luftfahrzeugtyps (102a) zum Tank (104b) des zweiten Luftfahrzeugtyps (102b) vorgesehen ist, und ein zweites Übertragungssystem (112b) aufweist, das zur Gewährleistung der Übertragung von Wasserstoff vom Tank (104b) des zweiten Luftfahrzeugtyps (102b) zum Tank (104c) des dritten Luftfahrzeugtyps (102c) vorgesehen ist.

4. Flughafenanlage (100, 200) nach einem der Ansprüche 2 bis 3, **dadurch gekennzeichnet, dass** sie ein erstes Füllsystem (114a), das zur Gewährleistung der Übertragung von Wasserstoff vom Tank (104a) des ersten Luftfahrzeugtyps (102a) zum zweiten Speichertank (106b) vorgesehen ist, und ein zweites Füllsystem (114b) aufweist, das zur Gewährleistung der Übertragung von Wasserstoff vom Tank (104b) des zweiten Luftfahrzeugtyps (102b) zum dritten Speichertank (106c) vorgesehen ist.

5. Flughafenanlage (100) nach einem der Ansprüche 2 bis 4, **dadurch gekennzeichnet, dass** sie ein erstes Ableitsystem (110a), das zur Gewährleistung der Übertragung von Wasserstoff vom ersten Speichertank (106a) zum zweiten Speichertank (106b) vorgesehen ist, und ein zweites Ableitsystem (110b) aufweist, das zur Gewährleistung der Übertragung von Wasserstoff vom zweiten Speichertank (106b) zum dritten Speichertank (106c) vorgesehen ist.

6. Flughafenanlage (100) nach Anspruch 5, **dadurch gekennzeichnet, dass** sie einen vierten Speichertank (106d) mit einem Sättigungsdruck von mehr als 5 bar und ein drittes Ableitsystem (110c) aufweist, das zur Gewährleistung der Übertragung von Wasserstoff vom dritten Speichertank (106c) zum vierten Speichertank (106d) vorgesehen ist.

7. Flughafenanlage (100) nach Anspruch 6, **dadurch gekennzeichnet, dass** sie ein drittes Füllsystem (114c) aufweist, das zur Gewährleistung der Übertragung von Wasserstoff vom Tank (104c) des dritten Luftfahrzeugtyps (102c) zum vierten Speichertank (106d) vorgesehen ist.

8. Flughafenanlage (200) nach einem der Ansprüche 2 bis 4, **dadurch gekennzeichnet, dass** die Speichertanks (106a-c) fluidisch unabhängig voneinander sind.

9. Flughafenanlage (200) nach Anspruch 8, **dadurch gekennzeichnet, dass** sie einen vierten Speichertank (106d) aufweist, der von den anderen Speichertanks (106a-c) fluidisch unabhängig ist.

10. Verfahren zur Steuerung einer Flughafenanlage (200) nach Anspruch 9, wobei ausgehend von einem Zustand, in welchem der erste Speichertank (106a) einen ersten Füllgrad so aufweist, dass er einen Sättigungsdruck im zweiten Intervall (P'1) von [1,05 bar, 1,2 bar] ([105 kPa, 120 kPa]) aufweist, der zweite Speichertank (106b) einen zweiten Füllgrad so aufweist, dass er einen Sättigungsdruck im zweiten Intervall (P'2) von [2 bar, 3 bar] ([200 kPa, 300 kPa]) aufweist, der dritte Speichertank (106c) einen dritten Füllgrad so aufweist, dass er einen Sättigungsdruck im zweiten Intervall (P'3) von [4 bar, 5 bar] ([400 kPa, 500 kPa]) aufweist, der vierte Speichertank (106d) einen vierten Füllgrad so aufweist, dass er einen Sättigungsdruck von mehr als 5 bar (500 kPa) aufweist, jeder Speichertank (106a-d) nacheinander und parallel vom ersten Füllgrad mit einem Sättigungsdruck im zweiten Intervall (P'1) von [1,05 bar, 1,2 bar] ([105 kPa, 120 kPa]) zum zweiten Füllgrad mit einem Sättigungsdruck im zweiten Intervall (P'2) von [2 bar, 3 bar] ([200 kPa, 300 kPa]) zum dritten Füllgrad mit einem Sättigungsdruck im zweiten Intervall (P'3) von [4 bar, 5 bar] ([400 kPa, 500 kPa]) zum vierten Füllgrad mit einem Sättigungsdruck von mehr als 5 bar (500 kPa) und zum ersten Füllgrad mit einem Sättigungsdruck im zweiten Intervall (P'1) von [1,05 bar, 2 bar] ([105 kPa, 120 kPa]) gelangt, und so weiter.

## Claims

1. Airport facility (100, 200) comprising:
- a plurality of aircraft types (102a-c), wherein each aircraft (102a-c) of one type comprises a tank (104a-c) intended to contain hydrogen at a saturation pressure within a first range (P1, P2, P3) of a plurality of first ranges (P1, P2, P3), wherein each first range (P1, P2, P3) is different from the other first ranges (P1, P2, P3),
- a plurality of hydrogen storage tanks (106a-c), each storage tank being at a saturation pressure within a second range (P'1, P'2, P'3) different from the other second ranges (P'1, P'2, P'3) of the other storage tanks,
- for each aircraft type (102a-c), a storage tank corresponding to said storage tanks (106a-c) for supplying each aircraft type from the storage tank having a saturation pressure compatible with the saturation pressure of the tank of the type in question, and
- for each storage tank (106a-c), filling means (108a-c) for filling, from said storage tank (106a-c), the tank (104a-c) of the aircraft (102a-c) corresponding to said storage tank (106a-c).

2. Airport facility (100, 200) according to Claim 1, **characterized in that** there are three aircraft types (102a-c), **in that** for a first aircraft type (102a), the first range (P1) is [1.2 bar, 2 bar] ([120 kPa, 200 kPa]) and the second range (P'1) of a first storage tank (106a) is [1.05 bar, 1.2 bar] ([105 kPa, 120 kPa]), **in that** for a second aircraft type (102b), the first range (P2) is [2 bar, 4 bar] ([200 kPa, 400 kPa]) and the second range (P'2) of a second storage tank (106b) is [2 bar, 3 bar] ([200 kPa, 300 kPa]) and **in that** for a third aircraft type (102c), the first range (P3) is [4 bar, 6 bar] ([400 kPa, 600 kPa]) and the second range (P'3) of a third storage tank (106c) is [4 bar, 5 bar] ([400 kPa, 500 kPa]).

3. Airport facility (100, 200) according to Claim 2, **characterized in that** it has a first transfer system (112a) for transferring hydrogen from the tank (104a) of the first aircraft type (102a) to the tank (104b) of the second aircraft type (102b), and a second transfer system (112b) for transferring hydrogen from the tank (104b) of the second aircraft type (102b) to the tank (104c) of the third aircraft type (102c).

4. Airport facility (100, 200) according to either of Claims 2 and 3, **characterized in that** it has a first filling system (114a) for transferring hydrogen from the tank (104a) of the first aircraft type (102a) to the second storage tank (106b), and a second filling system (114b) for transferring hydrogen from the tank (104b) of the second aircraft type (102b) to the third storage tank (106c).

5. Airport facility (100) according to one of Claims 2 to 4, **characterized in that** it comprises a first overflow system (110a) for transferring hydrogen from the first storage tank (106a) to the second storage tank (106b), and a second overflow system (110b) for transferring hydrogen from the second storage tank (106b) to the third storage tank (106c).

6. Airport facility (100) according to Claim 5, **characterized in that** it comprises a fourth storage tank (106d) at a saturation pressure greater than 5 bar, and a third overflow system (110c) for transferring hydrogen from the third storage tank (106c) to the fourth storage tank (106d).

7. Airport facility (100) according to Claim 6, **characterized in that** it comprises a third filling system (114c) for transferring hydrogen from the tank (104c) of the third aircraft type (102c) to the fourth storage tank (106d).

8. Airport facility (200) according to one of Claims 2 to 4, **characterized in that** the storage tanks (106a-c) are fluidically independent of one another.

9. Airport facility (200) according to Claim 8, **characterized in that** it comprises a fourth storage tank (106d) that is fluidically independent of the other storage tanks (106a-c).

10. Method for managing an airport facility (200) according to Claim 9, wherein, starting from a situation in which the first storage tank (106a) is at a first fill level such that it is at a saturation pressure in the second range (P'1) of [1.05 bar, 1.2 bar] ([105 kPa, 120 kPa]), in which the second storage tank (106b) is at a second fill level such that it is at a saturation pressure in the second range (P'2) of [2 bar, 3 bar] ([200 kPa, 300 kPa]), in which the third storage tank (106c) is at a third fill level such that it is at a saturation pressure in the second range (P'3) of [4 bar, 5 bar] ([400 kPa, 500 kPa]), in which the fourth storage tank (106d) is at a fourth fill level such that it is at a saturation pressure greater than 5 bar (500 kPa), each storage tank (106a-d) passes successively and in parallel from the first fill level with a saturation pressure in the second range (P'1) of [1.05 bar, 1.2 bar] ([105 kPa, 120 kPa]) to the second fill level with a saturation pressure in the second range (P'2) of [2 bar, 3 bar] ([200 kPa, 300 kPa]) to the third fill level with a saturation pressure in the second range (P'3) of [4 bar, 5 bar] ([400 kPa, 500 kPa]) to the fourth fill level with a saturation pressure greater than 5 bar (500 kPa) and to the first fill level with a saturation pressure in the second range (P'1) of [1.05 bar, 2 bar] ([105 kPa, 120 kPa]) and so on.
